# EUROPEAN PATENT APPLICATION

(11) **EP 4 598 250 A1**
(43) Date of publication of application: **06.08.2025**
(21) Application number: 23871369.7
(22) Date of filing: 07.07.2023
(51) Int. Cl.: H04W 76/10

(54) **DEVICE AND METHOD FOR RADIO COMMUNICATION**

(30) Priority: 28.09.2022 JP 2022155413
(71) Applicant: NEC Corporation, 108-8001 Tokyo (JP)
(72) Inventor: HAYASHI Satoaki, Tokyo 108-8001 (JP); CHEN Yuhua, Tokyo 108-8001 (JP)
(74) Representative: Mathys & Squire
(86) International application number: PCT/JP2023/025343
(87) International publication number: WO 2024/070125

(57) **Abstract**

An apparatus (1, 3) for radio communication identifies or detects, from an upper layer Protocol Data Unit (PDU) flow, boundaries of a plurality of upper layer PDU sets, each of which is composed of one or more upper layer PDUs. The apparatus (1, 3) maps these upper layer PDU sets to a plurality of different data radio bearers (DRBs) based on one or more attributes of each upper layer PDU set. This can provide, for example, improvements in the handling of upper layer PDU sets in the radio protocol layers.

## Description

### Technical Field

The present disclosure relates to a radio communication system, and in particular to a radio protocol stack for an air interface.

### Background Art

For 3rd Generation Partnership Project (3GPP (registered trademark)) Release 18, 3GPP is discussing enhancements to 5G New Radio (NR) for Extended Reality (XR) services (see, for example, Non-Patent Literature 1 and 2). Extended Reality (XR) services are also referred to as XR and media (XRM) services or XR/media (XRM) services.

XR services require Protocol Data Unit (PDU) layer PDUs to be transported between a User Equipment (UE) and a Data Network (DN) over a core network and a radio access network (RAN). For example, the PDU layer is the Internet Protocol (IP) version 4 (v4) or version 6 (v6) layer, and PDUs in the PDU layer are IP packets.

XR service PDUs have interdependencies and different levels of importance. For example, PDUs on which other PDUs depend are expected to be more important. For example, PDUs on which other PDUs depend are PDUs that carry fragments of an intra-coded (I) frame, and other PDUs are PDUs that carry fragments of a predicted (P) frame or a bi-directional predicted (B) frame.

For example, consecutive PDUs with the same importance level (e.g., PDUs carrying the fragments of an I-frame) can be treated as a single PDU set. Alternatively, PDUs carrying the payload of one unit of information generated at the application level can be treated as a single PDU set. Accordingly, an XR service flow can be considered as a flow of consecutive PDU sets. In other words, XR service data can be categorized into a list of consecutive PDU sets. For example, a single PDU set can correspond to PDUs carrying data for a single video frame. Except for the importance level, the Quality of Service (QoS) requirements for an XR service flow are consistent. Accordingly, an XR service flow can be mapped to a QoS flow. In this case, a single QoS flow contains multiple PDU sets with different importance levels. The importance level per PDU set is defined or determined by an Application Function (AF) or an XR application server, and is provided to the core network as part of the PDU set-related information.

A PDU set is composed of one or more PDUs carrying the payload of one unit of information generated at the application level (e.g., a frame or video slice for XR services). In some implementations, all PDUs in a PDU set are needed by the application layer to use the corresponding unit of information. In other implementations, the application layer can still recover part or all of the information unit even if some PDUs are missing. In other words, multiple PDU sets can be categorized into different types based not only on their importance or dependency, but also on factors such as differences in encoding method.

For example, in a certain type of PDU set, all PDUs in a PDU set are required by the application layer to use the corresponding information unit. In this type of PDU set, all PDUs in a PDU set can be said to be essential PDUs.

In another type of PDU set, one or more specific PDUs in a PDU set are required by the application layer to use the corresponding information unit, but the remaining PDUs are not necessarily required by the application layer. In this type of PDU set, some of the PDU(s) or a PDU subset in a PDU set can be said to be essential PDUs.

In yet another type of PDU set, the application layer needs to receive at least K of the N PDUs in the entire PDU set in order to use the corresponding information unit. In this type of PDU set, there are no essential PDUs, and the K parameter is required to be included in the PDU set-related information.

### Citation List

### Non Patent Literature

[Non-Patent Literature 1] Nokia, "New SID "Study on XR Enhancements for NR"", RP-213587, 3GPP TSG RAN Meeting #94e, December 6-17, 2021
[Non-Patent Literature 2] 3GPP TR 23.700-60 V1.1.0 (2022-09), "3rd Generation Partnership Project; Technical Specification Group Services and System Aspects; Study on XR (Extended Reality) and media services (Release 18)", September 2022
[Non-Patent Literature 3] SA4 (3GPP TSG SA WG4), "[DRAFT] LS Reply on QoS support with PDU Set granularity", S4-220505, 3GPP TSG-WG SA4 Meeting #118E, April 6-14, 2022

### Summary of Invention

### Technical Problem

As mentioned above, a new concept called a PDU set is going to be introduced with respect to XR services. A PDU set is a set of PDUs at a layer (specifically, the PDU layer (e.g., the IPv4 layer or the IPv6 layer)) above the radio protocol layers. Accordingly, the terms "upper layer PDU set" and "upper layer PDUs" are used throughout this specification. This is to distinguish upper layer PDUs and PDU sets from the PDUs of the various radio protocol layers, such as the Service Data Adaptation Protocol (SDAP) and Packet Data Convergence Protocol (PDCP) sublayers. To avoid redundancy, the terms "PDU set" and "PDUs" are also used, but unless the context makes it clear otherwise, they have the same meaning as "upper layer PDU set" and "upper layer PDUs".

The new concept of a PDU set or upper layer PDU set may affect the radio protocols between a UE and a radio access network. The inventors considered the handling of upper layer PDU sets at the radio protocol layers and found various problems.

One of these problems relates to the mapping of a PDU set to a data radio bearer (DRB). In the current 5G NR specification, a QoS flow is mapped to only one DRB in the Service Data Adaptation Protocol (SDAP) sublayer. However, in some implementations, this restriction may increase the overhead of the Packet Data Convergence Protocol (PDCP) sublayer, which is below SDAP. If there are multiple types of PDU sets within a single QoS flow, and each PDU set type needs to be treated differently, for example in SDU discarding, then the PDCP is required to identify which PDU set type each PDCP SDU (or SDAP Data PDU) in a DRB belongs to.

Another problem relates to how to transport, at the radio protocol layers, multiple upper layer PDUs belonging to an upper layer PDU set. As mentioned above, in some PDU set types, one or more specific PDUs within a PDU set are required by the application layer to use the corresponding information unit, but the remaining PDUs are not necessarily required by the application layer. In this case, it may be effective to handle the essential PDU(s) together at the radio protocol layers.

Yet another problem relates to SDU discarding at the radio protocol layers, taking into account upper layer PDU sets. In the current 5G NR specification, the PDCP layer supports timer-based SDU discarding. Specifically, if the discard timer (i.e., discardTimer) of a PDCP SDU expires, or if the successful delivery of a PDCP SDU is confirmed by a PDCP status report, the transmitting PDCP entity established per DRB shall discard this PDCP SDU together with the corresponding SDAP Data PDU. If the corresponding PDCP Data PDU has already been sent to the lower layer, the transmitting PDCP entity instructs the lower layer (i.e., the Radio Link Control (RLC) sublayer) to discard it. It is currently unclear how the discarding of SDUs should be handled taking into account upper layer PDU sets.

One of the objects to be achieved by the example embodiments disclosed herein is to provide apparatuses, methods, and programs that contribute to solving at least one of a plurality of problems, including the above-mentioned problems. It should be noted that this object is only one of the objects to be achieved by the example embodiments disclosed herein. Other objects or problems and novel features will become apparent from the following description and the accompanying drawings.

### Solution to Problem

In a first aspect, an apparatus for radio communication is configured to provide functions of an intermediate layer between an upper layer and a lower layer. The functions of the intermediate layer include identifying, from a first upper layer PDU flow, boundaries of a plurality of upper layer PDU sets, each of which is composed of one or more upper layer PDUs. The functions of the intermediate layer further include mapping the plurality of upper layer PDU sets to a plurality of different data radio bearers based on one or more attributes of each upper layer PDU set.

In a second aspect, a method performed by an apparatus for radio communication includes providing functions of an intermediate layer between an upper layer and a lower layer. The functions of the intermediate layer include identifying, from a first upper layer PDU flow, boundaries of a plurality of upper layer PDU sets, each of which is composed of one or more upper layer PDUs. The functions of the intermediate layer further include mapping the plurality of upper layer PDU sets to a plurality of different data radio bearers based on one or more attributes of each upper layer PDU set.

In a third aspect, an apparatus for radio communication is configured to provide functions of an intermediate layer between an upper layer and a lower layer. The functions of the intermediate layer include selecting, from a single intermediate layer SDU set corresponding to a single upper layer PDU set, a subset of intermediate layer SDUs of higher importance. The functions of the intermediate layer further include concatenating or assembling the subset of intermediate layer SDUs into a single intermediate layer PDU.

In a fourth aspect, a method performed by an apparatus for radio communication includes providing functions of an intermediate layer between an upper layer and a lower layer. The functions of the intermediate layer include selecting, from a single intermediate layer SDU set corresponding to a single upper layer PDU set, a subset of intermediate layer SDUs of higher importance. The functions of the intermediate layer further include concatenating or assembling the subset of intermediate layer SDUs into a single intermediate layer PDU.

In a fifth aspect, an apparatus for radio communication is configured to provide functions of an intermediate layer between an upper layer and a lower layer. The functions of the intermediate layer include, if a discard timer for a single intermediate layer SDU set corresponding to a single upper layer PDU set expires, discarding all intermediate layer SDUs belonging to the intermediate layer SDU set.

In a sixth aspect, a method performed by an apparatus for radio communication includes providing functions of an intermediate layer between an upper layer and a lower layer. The functions of the intermediate layer include, if a discard timer for a single intermediate layer SDU set corresponding to a single upper layer PDU set expires, discarding all intermediate layer SDUs belonging to the intermediate layer SDU set.

In a seventh aspect, an apparatus for radio communication is configured to provide functions of an intermediate layer between an upper layer and a lower layer. The functions of the intermediate layer include, if a delivery failure is confirmed for one or more intermediate layer SDUs belonging to a single intermediate layer SDU set corresponding to a single upper layer PDU set, discarding all intermediate layer SDUs belonging to the intermediate layer SDU set.

In an eighth aspect, a method performed by an apparatus for radio communication includes providing functions of an intermediate layer between an upper layer and a lower layer. The functions of the intermediate layer include, if a delivery failure is confirmed for one or more intermediate layer SDUs belonging to a single intermediate layer SDU set corresponding to a single upper layer PDU set, discarding all intermediate layer SDUs belonging to the intermediate layer SDU set.

A ninth aspect is directed to a program. The program includes a set of instructions (software code) that, when read into a computer, causes the computer to perform the method according to the second, fourth, sixth, or eighth aspect described above.

### Advantageous Effects of Invention

According to the aspects described above, it is possible to provide apparatuses, methods, and programs that contribute to solving at least one of a plurality of problems related to handling upper layer PDU sets in the radio protocol layers, including the above-mentioned problems.

### Brief Description of Drawings

Fig. 1 shows an example configuration of a radio communication system in an example embodiment;
Fig. 2 shows an example of a user plane protocol stack in an example embodiment;
Fig. 3 is a flowchart showing an example of the operation of an apparatus (e.g., UE, RAN node) in an example embodiment;
Fig. 4 shows an example of the operation of an apparatus (e.g., UE, RAN node) in an example embodiment;
Fig. 5 is a flowchart showing an example of the operation of an apparatus (e.g., UE, RAN node) in an example embodiment;
Fig. 6 shows an example of the operation of an apparatus (e.g., UE, RAN node) in an example embodiment;
Fig. 7 shows an example of the operation of an apparatus (e.g., UE, RAN node) in an example embodiment;
Fig. 8 is a flowchart showing an example of the operation of an apparatus (e.g., UE, RAN node) in an example embodiment;
Fig. 9 is a flowchart showing an example of the operation of an apparatus (e.g., UE, RAN node) in an example embodiment;
Fig. 10 is a flowchart showing an example of the operation of an apparatus (e.g., UE, RAN node) in an example embodiment;
Fig. 11 is a flowchart showing an example of the operation of an apparatus (e.g., UE, RAN node) in an example embodiment;
Fig. 12 is a block diagram showing an example configuration of a UE in an example embodiment; and
Fig. 13 is a block diagram showing an example configuration of a RAN node in an example embodiment.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The following example embodiments are described with respect to the 3GPP 5th generation mobile communication system (5G system) and its evolution. However, these example embodiments can also be applied to other radio communication systems.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

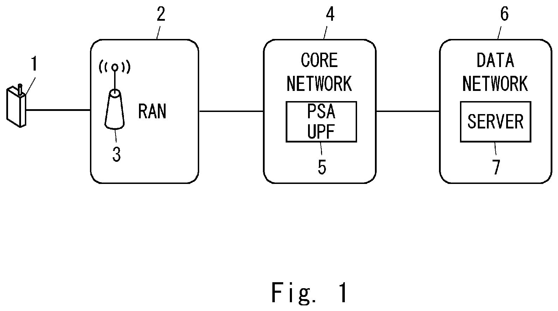

First, the configuration and operation of a plurality of network elements common to a plurality of example embodiments are described. Fig. 1 shows an example configuration of a radio communication system related to a plurality of example embodiments. Each of the elements shown in Fig. 1 is a network function that provides, for example, a 3GPP-defined interface. Each element (or network function) shown in Fig. 1 may be implemented, for example, as a network element on dedicated hardware, as a software instance running on dedicated hardware, or as a virtualized function instantiated on an application platform.

The network system shown in Fig. 1 includes a UE 1, a RAN 2, a core network 4, and a data network (Data Network (DN)) 6. The RAN 2 may be a Next Generation Radio Access Network (NG-RAN). The RAN 2 includes one or more RAN nodes 3. One or more RAN nodes 3 may be gNBs.

The RAN node 3 may be a Central Unit (e.g., gNB-CU) in a cloud RAN (C-RAN) deployment, or it may be a combination of a CU and one or more Distributed Units (e.g., gNB-DUs). C-RAN is also referred to as CU/DU split. A CU may include a Control Plane (CP) Unit (e.g., gNB-CU-CP) and one or more User Plane (UP) Units (e.g., gNB-CU-UP).

The core network 4 may be a 5G Core (5GC). The core network 4 includes one or more core network nodes. These core network nodes include one or more control plane nodes and one or more user plane (or data plane) nodes. In the case of 5G systems, the one or more control plane nodes include an Access and Mobility Management Function (AMF), a Session Management Function (SMF), a Unified Data Management (UDM), a Policy Control Function (PCF), and a Network Exposure Function (NEF), etc. The one or more user plane nodes include a PDU Session Anchor (PSA) User Plane Function (UPF) 5 and may also include one or more intermediate UPFs. An intermediate UPF may provide Uplink Classifier (UL CL) or Branching Point (BP) functions.

The UE 1 communicates with an application server 7 in the DN 6 via a connectivity service provided by the core network 4 and the RAN 2, specifically a PDU Connectivity service in the 5G system. A PDU Connectivity service provides a PDU Session, enabling the exchange of PDUs on the PDU layer between the UE 1 and the DN 6. For example, the application server 7 may provide an XR service to the UE 1 via the core network 4 and the RAN 2.

The DN 6 may be an Edge Data Network (EDN) or a Local Area Data Network (LADN). The application server 7 may include one or more edge computing servers located near the RAN 2.

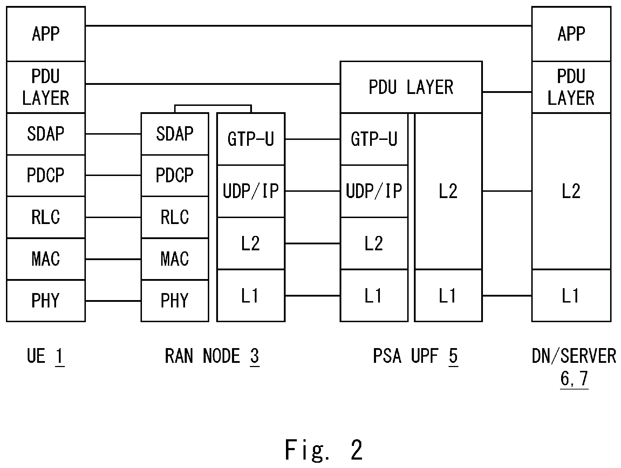

Fig. 2 shows an example of the user plane protocol stack provided by the radio communication system shown in Fig. 1. The UE 1 and the application server 7 can exchange PDUs (e.g., IP packets) on the PDU layer. The application layer means the layer above the PDU layer. Accordingly, if the PDU layer is the IP layer, the application layer may include the transport layer protocol (e.g., Transmission Control Protocol (TCP), User Datagram Protocol (UDP)) of the Open Systems Interconnection (OSI) model. For example, in the case of XR services, the PDU layer protocol may be IP, while the application layer protocol may include H.264, H265, or H.266 codec, Real-time Transport Protocol (RTP), and UDP.

If the upper layer PDUs are XR service PDUs, they have interdependencies and different levels of importance. For example, PDUs on which other PDUs depend are expected to be more important. For example, PDUs on which other PDUs depend are PDUs that carry fragments of an I-frame, and other PDUs are PDUs that carry fragments of a P-frame or a B-frame.

For example, consecutive PDUs with the same importance level (e.g., PDUs carrying the fragments of an I-frame) can be treated as a single PDU set. Alternatively, PDUs carrying the payload of one unit of information generated at the application level can be treated as a single PDU set. Accordingly, an XR service flow can be considered as a flow of consecutive PDU sets. In other words, XR service data can be categorized into a list of consecutive PDU sets. For example, a single PDU set can correspond to PDUs carrying data for a single video frame. Except for the importance level, the Quality of Service (QoS) requirements for an XR service flow are consistent. Accordingly, an XR service flow can be mapped to a QoS flow. In this case, a single QoS flow contains multiple PDU sets with different importance levels. The importance level per PDU set is defined or determined by an Application Function (AF) or an XR application server, and is provided to the core network as part of the PDU set-related information.

A PDU set is composed of one or more PDUs carrying the payload of one unit of information generated at the application level (e.g., a frame or video slice for XR services). In some implementations, all PDUs in a PDU set are needed by the application layer to use the corresponding unit of information. In other implementations, the application layer can still recover part or all of the information unit even if some PDUs are missing. In other words, multiple PDU sets can be categorized into different types based not only on their importance or dependency, but also on factors such as differences in encoding method.

For example, in a certain type of PDU set, all PDUs in a PDU set are required by the application layer to use the corresponding information unit. In this type of PDU set, all PDUs in a PDU set can be said to be essential PDUs.

In another type of PDU set, one or more specific PDUs in a PDU set are required by the application layer to use the corresponding information unit, but the remaining PDUs are not necessarily required by the application layer. In this type of PDU set, some of the PDU(s) or a PDU subset in a PDU set can be said to be essential PDUs.

In yet another type of PDU set, the application layer needs to receive at least K of the N PDUs in the entire PDU set in order to use the corresponding information unit. In this type of PDU set, there are no essential PDUs, and the K parameter is required to be included in the PDU set-related information.

The UE 1 and the RAN 2 (or RAN node 3) provide the handling of upper layer PDU sets in the radio protocol layers. Details of these are explained in the following example embodiments.

### First Example Embodiment

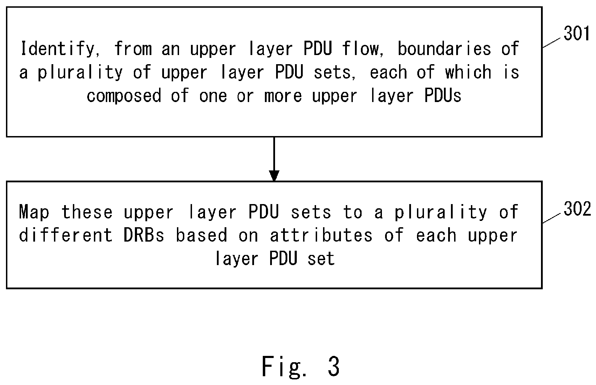

This example embodiment provides improvements for handling upper layer PDU sets at the radio protocol layers. Fig. 3 shows an example of an operation performed by an apparatus for radio communication. The apparatus for radio communication may be the UE 1 or the RAN node 3. The apparatus for radio communication provides functions or services of an intermediate layer between an upper layer and a lower layer. The operation shown in Fig. 3 is related to mapping of a PDU set to a DRB. Accordingly, the intermediate layer may be the SDAP sublayer. More specifically, the operation in Fig. 3 may be performed by a transmitting SDAP entity.

In step 301, the apparatus identifies or detects, from an upper layer PDU flow, the boundaries of a plurality of upper layer PDU sets, each of which is composed of one or more upper layer PDUs. In other words, the apparatus identifies or detects each PDU set contained in an upper layer PDU flow. The upper layer PDU flow may be a QoS flow (i.e., a 5G QoS flow). A QoS flow is the finest granularity for QoS forwarding processing in a 5G system. All traffic mapped to the same 5G QoS flow will receive the same forwarding processing (e.g., scheduling policy, queue management policy, rate shaping, RLC configuration, etc.). Different QoS forwarding processing requires different 5G QoS flows.

If the apparatus is the RAN node 3 that performs downlink transmission, the apparatus may identify boundaries of upper layer PDU sets based on header information of upper layer PDUs (e.g., General Packet Radio Service Tunnelling Protocol User (GTP-U) header) or header information and payload information of upper layer PDUs. The header information or payload information of each upper layer PDU, or a combination thereof, may indicate the sequence number of the PDU set, the boundary of the PDU set, or both. More specifically, to indicate the boundary of the PDU set, a start mark (e.g., a 1-bit flag) may be included in the header information of the PDU. The start mark is only activated in the first PDU in the PDU set. Additionally or alternatively, an end mark (e.g., a 1-bit flag) may be included in the header information of the PDU. The end mark is only activated in the last PDU in the PDU set. Alternatively, the apparatus may detect the boundary of the PDU set based on the change in the sequence number of the PDU set.

The header information or payload information of each upper layer PDU, or a combination thereof, may indicate attributes of the PDU set. The attributes of the PDU set may include the type, importance level, or dependencies of the PDU set, or any combination thereof. The header information or payload information of each upper layer PDU, or a combination thereof, may indicate the sequence number of the PDU within the PDU set.

If the apparatus is the UE 1 that performs uplink transmission, the apparatus may receive a QoS profile including PDU set handling parameters from the core network 4. The PDU set handling parameters include information about an internal header (e.g., RTP header, RTP payload header) necessary to identify the boundary (and attributes) of a PDU set. The information carried by an RTP header and the information carried by an RTP payload header can be used to identify PDUs that belong to a single PDU set or to distinguish the importance of PDU sets. For example, the Marker (M) bit in the RTP header is intended to mark important events such as frame boundaries in the packet stream, and can be used to detect the boundaries of PDU sets.

In step 302, the apparatus maps these plurality of upper layer PDU sets to a plurality of different DRBs based on attributes of each upper layer PDU set. In other words, the apparatus maps a plurality of PDU sets with different attributes within a single QoS flow to different DRBs. The attributes of each upper layer PDU set may be one or any combination of the type, importance, and dependency of the PDU set.

After step 302, the apparatus adds a header of the intermediate layer (e.g., SDAP sublayer) to each upper layer PDU (i.e., intermediate layer SDU) as necessary. The apparatus generates intermediate layer PDUs (e.g., SDAP Data PDUs) and sends them to the lower layer (e.g., PDCP sublayer).

According to the operation described with reference to Fig. 3, PDU sets with different attributes are mapped to different DRBs. Accordingly, the entity in the lower layer (e.g., PDCP) established for each DRB only needs to operate for a PDU set with a specific attribute, and does not need to identify the attribute of the PDU set. This can help to reduce the load on the lower layer (e.g. PDCP) entity.

The apparatus may perform the operation in Fig. 2 only for a specific type of upper layer PDU flow or QoS flow that includes upper layer PDU sets. The specific type of upper layer PDU flow or QoS flow may be referred to as, for example, an XR QoS flow, an XR service QoS flow, or an XR specific QoS flow. The apparatus may operate in the same manner as the radio bearer mapping in the current 5G NR for non-specific types or normal upper layer PDU flows or QoS flows. Specifically, the apparatus may map all upper layer PDUs belonging to a non-specific type upper layer PDU flow to a single DRB.

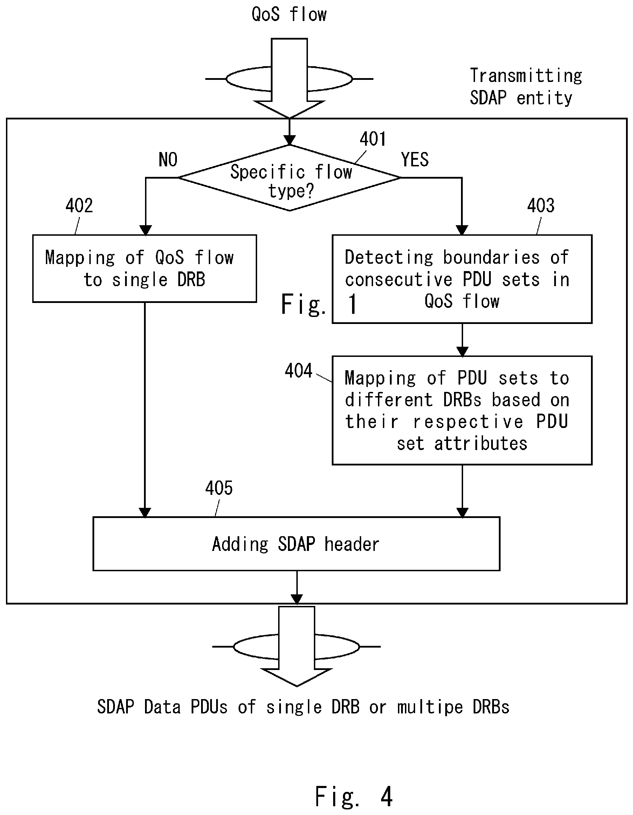

Fig. 4 shows an example of the operation of a transmitting SDAP entity. In step 401, the transmitting SDAP entity determines whether a QoS flow from the upper layer is of a specific type. If the QoS flow is not of a specific type, the transmitting SDAP entity maps the QoS flow to a single DRB based on the configured mapping rules of QoS flows to DRBs (step 402).

On the other hand, if the QoS flow is of a specific type (e.g., XR type), the transmitting SDAP entity performs steps 403 and 404. Steps 403 and 404 are the same as steps 301 and 302 in Fig. 3. Specifically, in step 403, the transmitting SDAP entity identifies or detects the boundaries of upper layer PDU sets based on the configured PDU set handling parameters. In step 404, the transmitting SDAP entity maps different PDU sets with different attributes to different DRBs based on the configured mapping rules of PDU sets to DRBs.

In step 405, the transmitting SDAP entity adds an SDAP header to each upper layer PDU (i.e., SDAP SDU) as required. The transmitting SDAP entity then generates SDAP Data PDUs and sends them to the lower layer (i.e., the PDCP sublayer).

### Second Example Embodiment

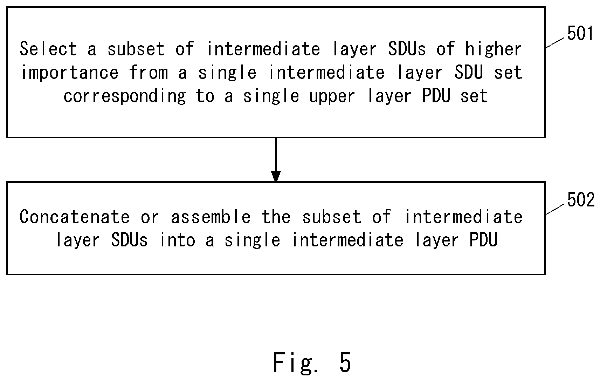

This example embodiment provides concatenation or assembly of PDUs belonging to a single upper layer PDU set into a single radio protocol layer PDU. Fig. 5 shows an example of an operation performed by an apparatus for radio communication. The apparatus for radio communication may be the UE 1 or the RAN node 3. The apparatus for radio communication provides functions or services of an intermediate layer between an upper layer and a lower layer. The intermediate layer may be the SDAP sublayer or the PDCP sublayer.

In step 501, an intermediate layer entity in the apparatus selects a subset of intermediate layer SDUs of higher importance from a single intermediate layer SDU set corresponding to a single upper layer PDU set. In some implementations, the intermediate layer SDUs (i.e., upper layer PDUs) of higher importance may be PDUs that are necessarily required to be received by the peer apparatus (receiver-side) in order to utilize the upper layer PDU set.

If the intermediate layer entity is an SDAP entity, the upper layer PDU set is a PDU set of the PDU layer. In addition, the upper layer PDUs are PDUs (or GTP-U packets) of the PDU layer. In this case, the header information (e.g., GTP-U header) of each upper layer PDU may indicate the importance level of each upper layer PDU, i.e., each intermediate layer SDU. The intermediate layer entity (i.e., the transmitting SDAP entity) may detect the importance level of each upper layer PDU, i.e., each intermediate layer SDU, based on the header information (e.g., GTP-U header) of the upper layer PDUs.

On the other hand, if the intermediate layer entity is a PDCP entity, the upper layer PDU set is a set of SDAP Data PDUs corresponding to a PDU set of the PDU layer. In addition, the upper layer PDUs are SDAP Data PDUs. In this case, the header information (e.g., SDAP header) of each upper layer PDU (i.e., SDAP Data PDU) may indicate the importance level of each SDAP Data PDU, i.e., each PDCP SDU. The intermediate layer entity (i.e., the transmitting PDCP entity) may detect the importance level of each upper layer PDU, i.e., each intermediate layer SDU, based on the header information (i.e., the SDAP header) of the upper layer PDUs. Alternatively, the intermediate layer entity (i.e., the transmitting PDCP entity) may detect the importance level of each upper layer PDU, i.e., each intermediate layer SDU, by inspecting the PDU layer PDU (e.g., IP packet) contained in the payload of the upper layer PDU (i.e., the SDAP Data PDU).

In step 502, the intermediate layer entity in the apparatus concatenates or assembles the subset of higher importance intermediate layer SDUs into a single intermediate layer PDU.

The apparatus may generate a plurality of intermediate layer PDUs, each of which includes a respective one of the remaining intermediate layer SDUs (i.e., upper layer PDUs) belonging to the intermediate layer SDU set (i.e., upper layer PDU set). In other words, the apparatus may generate multiple intermediate layer PDUs, each of which contains a respective one of the intermediate layer SDUs (i.e., upper layer PDUs) of relatively low importance included in a single intermediate layer SDU set. The intermediate layer SDUs (i.e., upper layer PDUs) of relatively low importance may be upper layer PDUs that are not necessarily required for the application layer to use the corresponding information unit.

According to the operation described with reference to Fig. 5, the radio protocol layers can collectively handle a PDU(s) of high importance among all the upper layer PDUs belonging to a single upper layer PDU set.

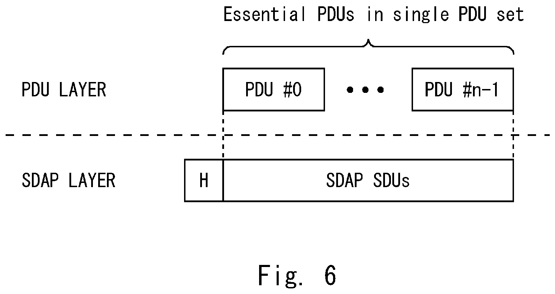

Fig. 6 shows an example of how an SDAP Data PDU is generated by a transmitting SDAP entity. The transmitting SDAP entity selects the upper layer PDUs of higher importance (e.g., essential upper layer PDUs) contained in a single upper layer PDU set and concatenates or assembles them into a single SDAP Data PDU.

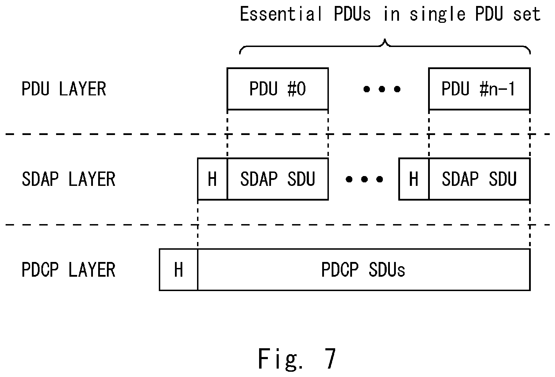

Fig. 7 shows an example of how a PDCP Data PDU is generated by a transmitting PDCP entity. First, the transmitting SDAP entity generates SDAP Data PDUs, each containing one upper layer PDU, and provides them to the PDCP entity. The header of each SDAP Data PDU may indicate the importance level of each SDAP Data PDU, i.e., of each PDCP SDU. The importance level indicated by the header of each SDAP Data PDU may be the same as the importance level of the upper layer PDU (PDU layer PDU) contained therein. Next, the transmitting PDCP entity selects the SDAP PDUs of higher importance (e.g., essential SDAP PDUs) contained in a single SDAP Data PDU set and concatenates or assembles them into a single PDCP Data PDU.

### Third Example Embodiment

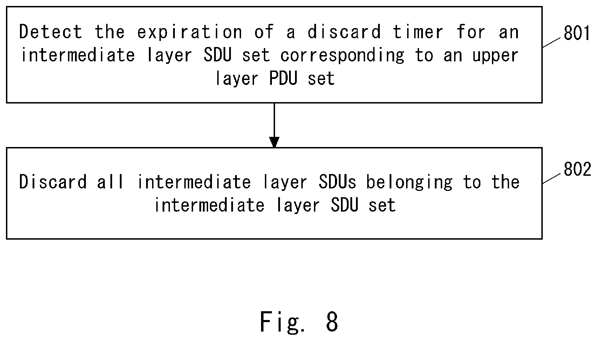

This example embodiment provides SDU (and PDU) discarding in the radio protocol layers, taking into account upper layer PDU sets. Fig. 8 shows an example of an operation performed by an apparatus for radio communication. The apparatus for radio communication may be the UE 1 or the RAN node 3. The apparatus for radio communication provides functions or services of an intermediate layer between an upper layer and a lower layer. The intermediate layer may be the SDAP sublayer, the PDCP sublayer, or the RLC sublayer.

In step 801, an intermediate layer entity in the apparatus detects the expiration of a discard timer for an intermediate layer SDU set corresponding to an upper layer PDU set. In step 802, the intermediate layer entity in the apparatus discards all intermediate layer SDUs belonging to this intermediate layer SDU set. In addition, the intermediate layer entity in the apparatus discards the intermediate layer PDUs corresponding to the discarded intermediate layer SDUs.

The length of the discard timer may be based on the delay budget (PDU-Set Delay Budget (PSDB)) of the corresponding upper layer PDU set. The PSDB defines the maximum amount of time that a PDU set is allowed to be delayed between the UE 1 and the N6 termination point (the termination point of the N6 interface to the DN 6) of the PSA UPF 5. The delay budget for the upper layer PDU set may be based on the Access Network (AN) PSDB, which is determined by subtracting from the PSDB a fixed value corresponding to the Core Network (CN) PSDB. The CN PSDB represents the delay between any N6 termination point in the UPF (any UPF that can be selected for the PDU Session) and the 5G-AN.

More specifically, the length of the discard timer may be determined based on the sum of a first value configured by the Radio Resource Control (RRC) layer and a second value corresponding to the PSDB. The first value, i.e., the RRC configured value, may be based on the importance (or importance level) of the corresponding upper layer PDU set.

In one example, the mapping of multiple upper layer PDU sets belonging to a single QoS flow to different DRBs, as described in the first example embodiment, may be used. In this case, the first value for determining the length of the discard timer, i.e., the RRC configured value, may be configured per DRB.

In another example, the mapping described in the first example embodiment may not be used, and all upper layer PDUs belonging to a single QoS flow may be mapped to a single DRB. In this case, the first value for determining the length of the discard timer, i.e., the RRC configured value, may be configured per PDU set attribute (e.g., per type, per importance level).

The operation described with reference to Fig. 8 can provide SDU discarding that takes into account upper layer PDU sets.

### Fourth Example Embodiment

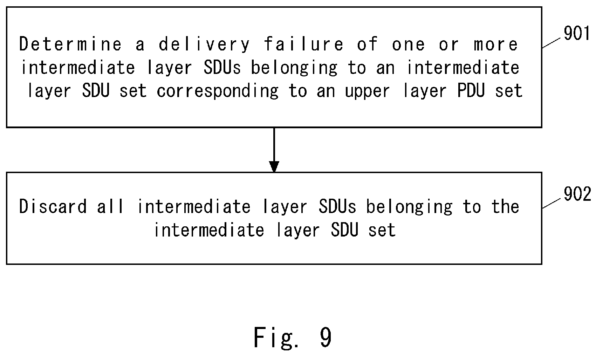

This example embodiment provides SDU discarding in the radio protocol layers, taking into account upper layer PDU sets. Fig. 9 shows an example of an operation performed by an apparatus for radio communication. The apparatus for radio communication may be the UE 1 or the RAN node 3. The apparatus for radio communication provides functions or services of an intermediate layer between an upper layer and a lower layer. The intermediate layer may be the SDAP sublayer, the PDCP sublayer, or the RLC sublayer.

In step 901, an intermediate layer entity in the apparatus determines a failure in the delivery of one or more intermediate layer SDUs belonging to an intermediate layer SDU set corresponding to an upper layer PDU set. In step 902, the intermediate layer entity in the apparatus discards all intermediate layer SDUs belonging to this intermediate layer SDU set. In addition, the intermediate layer entity in the apparatus discards the intermediate layer PDUs corresponding to the discarded intermediate layer SDUs.

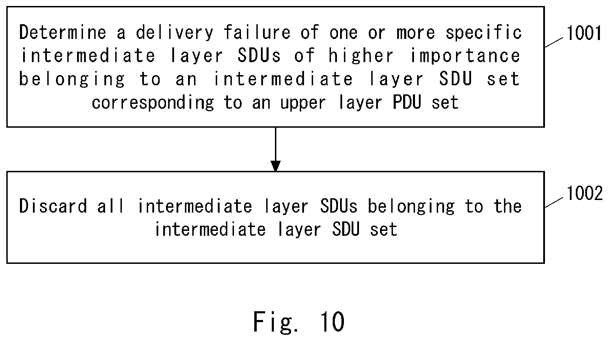

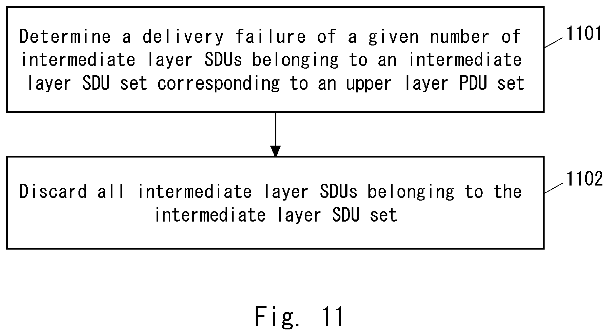

The operation in Fig. 9 can help prevent the delivery of unnecessary SDUs and PDUs. Figs. 10 and 11 show more specific cases of the operation in Fig. 9.

In step 1001 of Fig. 10, the intermediate layer entity in the apparatus determines a delivery failure of one or more specific intermediate layer SDUs of higher importance belonging to an intermediate layer SDU set corresponding to an upper layer PDU set. In step 1002, the intermediate layer entity in the apparatus discards all intermediate layer SDUs belonging to this intermediate layer SDU set. In addition, the intermediate layer entity in the apparatus discards the intermediate layer PDUs corresponding to the discarded intermediate layer SDUs.

The operation in Fig. 10 may be selectively performed only for a specific type of PDU set. As described above, in a certain type of PDU set, one or more specific PDUs in a PDU set are required by the application layer to use the corresponding information unit, but the remaining PDUs are not necessarily required by the application layer. In this type of PDU set, some of the PDU(s) or a PDU subset in a PDU set can be said to be essential PDUs. The operation in Fig. 10 can be selectively performed only for such PDU sets.

The operation shown in Fig. 10 enables SDU discarding that takes into account the characteristics of a particular type of PDU set, and helps to prevent the delivery of unnecessary SDUs and PDUs.

In step 1101 of Fig. 11, the intermediate layer entity in the apparatus determines a delivery failure of a given number of intermediate layer SDUs belonging to an intermediate layer SDU set corresponding to an upper layer PDU set. In step 1102, the intermediate layer entity in the apparatus discards all intermediate layer SDUs belonging to this intermediate layer SDU set. In addition, the intermediate layer entity in the apparatus discards the intermediate layer PDUs corresponding to the discarded intermediate layer SDUs.

The operation in Fig. 10 may be selectively performed only for a specific type of PDU set. As described above, in a certain type of PDU set, the application layer needs to receive at least K of the N PDUs in the entire PDU set in order to use the corresponding information unit. In this type of PDU set, there are no essential PDUs, and the K parameter is required to be included in the PDU set-related information. The operation in Fig. 11 can be selectively performed only for such PDU sets.

The operation shown in Fig. 11 enables SDU discarding that takes into account the characteristics of a particular type of PDU set, and helps to prevent the delivery of unnecessary SDUs and PDUs.

In the operations described with reference to Figs. 9 to 11, the intermediate layer entity in the apparatus may determine a failure in the delivery of one or more intermediate layer SDUs based on a delivery status report received from the peer apparatus (e.g., the receiving intermediate layer entity). If the operations described in Figs. 9 to 11 are performed by the transmitting SDAP entity, the delivery status report may be defined as a Control PDU in the SDAP layer sent from the receiving SDAP entity to the transmitting SDAP entity. On the other hand, if the operations described in Figs. 9 to 11 are performed by the transmitting PDCP entity, the delivery status report may be defined as an extension of the existing PDCP status report.

The delivery status report may indicate the PDCP count of the last PDCP PDU or PDCP SDU successfully received. Alternatively, the delivery status report may indicate the PDCP count value of the first PDCP PDU or PDCP SDU not yet received.

The delivery status report may be sent by the peer apparatus in response to the expiration of a timer in the peer apparatus (e.g., the receiving intermediate layer entity). For example, the peer apparatus may start a timer in response to receiving the first PDU of a PDU set, and send a delivery status report in response to the expiration of the timer. The length of the timer may be configured by the transmitting intermediate layer entity using the header of a control PDU or data PDU in the intermediate layer. Alternatively, the length of the timer may be configured by the RRC layer as one of the PDU set attributes.

Alternatively, the peer apparatus (e.g., the receiving intermediate layer entity) may send a delivery status report based on the number of intermediate layer SDUs or PDUs received by the peer apparatus. Specifically, the peer apparatus may send a delivery status report after each successful reception of a given number of PDCP PDUs or SDUs. The given number may be configured by the transmitting intermediate layer entity using the header of a control PDU or data PDU in the intermediate layer. Alternatively, the given number may be configured by the RRC layer as one of the PDU set attributes.

Alternatively, the peer apparatus (e.g., the receiving intermediate layer entity) may periodically send a delivery status report at a given time interval or cycle. The given time interval or cycle may be configured by the RRC layer as one of the PDU set attributes.

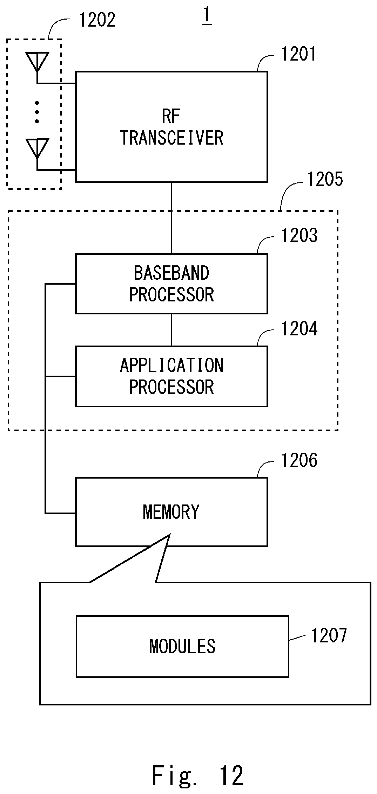

Examples of configurations of the UE 1 and the RAN node 3 according to the plurality of example embodiments described above are provided below. Fig. 12 shows a block diagram of an example configuration of the UE 1. The Radio Frequency (RF) transceiver 1201 performs analog RF signal processing to communicate with the RAN 2. The RF transceiver 1201 may include a plurality of transceivers. The analog RF signal processing performed by the RF transceiver 1201 includes frequency up-conversion, frequency down-conversion, and amplification. The RF transceiver 1201 is coupled with an antenna array 1202 and a baseband processor 1203. The RF transceiver 1201 receives modulated symbol data (or Orthogonal frequency-division multiplexing (OFDM) symbol data) from the baseband processor 1203, generates a transmission RF signal, and supplies the transmission RF signal to the antenna array 1202. The RF transceiver 1201 also generates a baseband received signal based on a received RF signal received by the antenna array 1202, and supplies the baseband received signal to the baseband processor 1203. The RF transceiver 1201 may include an analog beamformer circuit for beamforming. The analog beamformer circuit includes, for example, multiple phase shifters and multiple power amplifiers.

The baseband processor 1203 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 1203 may include signal processing for the SDAP, PDCP, RLC, Medium Access Control (MAC), and Physical (PHY) layers. The control plane processing by the baseband processor 1203 may include processing of Non-Access Stratum (NAS) protocols, RRC protocols, MAC Control Elements (CEs), and Downlink Control Information (DCI).

The baseband processor 1203 may perform Multiple Input Multiple Output (MIMO) encoding and precoding for beamforming.

The baseband processor 1203 may include a modem processor (e.g., Digital Signal Processor (DSP)) that performs digital baseband signal processing and a protocol stack processor (e.g., CPU or MPU) that performs control plane processing. In this case, the protocol stack processor that performs control plane processing may be integrated with an application processor 1204 described later.

The application processor 1204 is also referred to as a Central Processing Unit (CPU), Micro Processing Unit (MPU), microprocessor, or processor core. The application processor 1204 may include a plurality of processors (a plurality of processor cores). The application processor 1204 executes system software programs (operating system (OS)) and various application programs (e.g., voice call application, web browser, mailer, camera control application, music player application) read from a memory 1206 or other memory not shown, thereby realizing various functions of the UE 1.

In some implementations, as shown by the dashed line (1205) in Fig. 12, the baseband processor 1203 and the application processor 1204 may be integrated on a single chip. In other words, the baseband processor 1203 and the application processor 1204 may be implemented as a single System on Chip (SoC) device 1205. The SoC device may also be referred to as a system large-scale integration (LSI) or chipset.

The memory 1206 is a volatile memory, a non-volatile memory, or a combination thereof. The memory 1206 may include a plurality of physically independent memory devices. The volatile memory is, for example, Static Random Access Memory (SRAM), Dynamic RAM (DRAM), or a combination thereof. The non-volatile memory is, for example, Mask Read Only Memory (MROM), Electrically Erasable Programmable ROM (EEPROM), flash memory, or a hard disk drive, or any combination thereof. For example, the memory 1206 may include an external memory device that is accessible by the baseband processor 1203, the application processor 1204, and the SoC 1205. The memory 1206 may include an internal memory device that is integrated into the baseband processor 1203, the application processor 1204, or the SoC 1205. In addition, the memory 1206 may include memory within a Universal Integrated Circuit Card (UICC).

The memory 1206 may store one or more software modules (or computer programs) 1207 that include a set of instructions and data for performing the processing by the radio terminal 3 described in the above example embodiments. In some implementations, the baseband processor 1203 or the application processor 1204 may be configured to read and execute the software modules 1207 from the memory 1206, thereby performing the processing of the UE 1 as described in the example embodiments with reference to the drawings.

The control plane processing and operations performed by the UE 1 described in the above example embodiment can be implemented by elements other than the RF transceiver 1201 and the antenna array 1202, namely at least one of the baseband processor 1203 and the application processor 1204, and the memory 1206 that stores the software modules 1207.

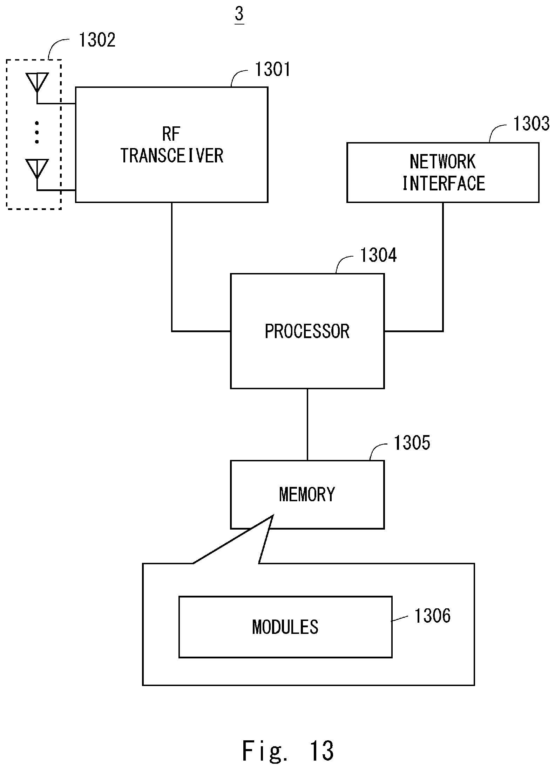

Fig. 13 is a block diagram showing an example of the configuration of the RAN node 3. Referring to Fig. 13, the RAN node 3 includes an RF transceiver 1301, a network interface 1303, a processor 1304, and a memory 1305. The RF transceiver 1301 performs analog RF signal processing to communicate with UEs. The RF transceiver 1301 may include a plurality of transceivers. The RF transceiver 1301 is coupled to an antenna array 1302 and the processor 1304. The RF transceiver 1301 receives modulated symbol data from the processor 1304, generates a transmission RF signal, and supplies the transmission RF signal to the antenna array 1302. The RF transceiver 1301 generates a baseband reception signal based on a reception RF signal received by the antenna array 1302 and supplies the baseband reception signal to the processor 1304. The RF transceiver 1301 may include an analog beamformer circuit for beamforming. The analog beamformer circuit includes, for example, a plurality of phase shifters and a plurality of power amplifiers.

The network interface 1303 is used to communicate with network nodes (e.g., other RAN nodes, and control plane and user plane nodes in the core network). For example, the network interface 1303 may include a network interface card (NIC) conforming to the IEEE 802.3 series.

The processor 1304 performs digital baseband signal processing (data plane processing) and control plane processing for wireless communication. The processor 1304 may include a plurality of processors. For example, the processor 1304 may include a modem processor (e.g., DSP) that performs digital baseband signal processing and a protocol stack processor (e.g., CPU or MPU) that performs control plane processing.

For example, the digital baseband signal processing performed by the processor 1304 may include signal processing for the SDAP, PDCP, RLC, MAC, and PHY layers. The control plane processing performed by the processor 1304 may also include processing of NAS messages, RRC messages, MAC CEs, and DCI. The control plane processing performed by the processor 1304 may also include processing of application layer signaling protocols such as XnAP, F1AP, and NGAP.

The processor 1304 may include a digital beamformer module for beamforming. The digital beamformer module may include a MIMO encoder and precoder.

The memory 1305 is composed of a combination of volatile and non-volatile memory. The volatile memory is, for example, SRAM, DRAM, or a combination thereof. The non-volatile memory is MROM, EEPROM, flash memory, hard disk drive, or any combination thereof. The memory 1305 may include storage that is remote from the processor 1304. In this case, the processor 1304 may access the memory 1305 through a network interface 1303 or an I/O interface.

The memory 1305 may store one or more software modules (or computer programs) 1306 containing a set of instructions and data for processing by the RAN node 3 described in the example embodiments described above. In some implementations, the processor 1304 may be configured to read and execute the software module 1306 from the memory 1305, thereby performing the processing of the RAN node 3 described in the example embodiments described above.

If the RAN node 3 is a Central Unit (CU) (e.g., gNB-CU) or a CU-CP, the RAN node 3 does not need to include the RF transceiver 1301 (and the antenna array 1302).

As explained using Figs. 12 and 13, each of the processors of the UE 1 and RAN node 3 in the above example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The example embodiments described above are merely examples of applications of the technical ideas of the inventors. These technical ideas are not limited to the above-described example embodiments, and various modifications may be made thereto.

For example, the whole or part of the example embodiments disclosed above can be described as, but not limited to, the following supplementary notes.

### (Supplementary Note 1)

An apparatus for radio communication configured to provide functions of an intermediate layer between an upper layer and a lower layer, the functions of the intermediate layer comprising:
means for identifying, from a first upper layer Protocol Data Unit (PDU) flow, boundaries of a plurality of upper layer PDU sets, each of which is composed of one or more upper layer PDUs; and
means for mapping the plurality of upper layer PDU sets to a plurality of different data radio bearers based on one or more attributes of each upper layer PDU set.

### (Supplementary Note 2)

The apparatus according to Supplementary Note 1, wherein
the means for mapping is configured to perform the boundary identification and the mapping to the plurality of different data radio bearers with respect to a specific type of upper layer PDU flow, and
the functions of the intermediate layer comprise means for mapping, with respect to a non-specific type of upper layer PDU flow, all upper layer PDUs belonging to the non-specific type of upper layer PDU flow to a single data radio bearer.

### (Supplementary Note 3)

The apparatus according to Supplementary Note 1, wherein the one or more attributes comprise one or any combination of a type, importance, and dependency of each upper layer PDU set.

### (Supplementary Note 4)

The apparatus according to any one of Supplementary Notes 1 to 3, wherein the functions of the intermediate layer comprise:
means for selecting a plurality of upper layer PDUs with higher importance from among an upper layer PDU set mapped to a first data radio bearer; and
means for concatenating or assembling the selected plurality of upper layer PDUs into a single intermediate layer PDU.

### (Supplementary Note 5)

The apparatus according to any one of Supplementary Notes 1 to 3, wherein
the functions of the intermediate layer comprise:
   means for generating a plurality of intermediate layer PDUs, each of which includes a respective one of upper layer PDUs of the plurality of upper layer PDU sets; and
   means for sending the generated plurality of intermediate layer PDUs to the lower layer, and
the apparatus is configured to provide functions of the lower layer, the functions of the lower layer comprising:
   means for selecting a plurality of intermediate layer PDUs containing a plurality of upper layer PDUs with higher importance from among an upper layer PDU set mapped to a first data radio bearer; and
   means for concatenating or assembling the selected plurality of intermediate layer PDUs into a single lower layer PDU.

### (Supplementary Note 6)

The apparatus according to any one of Supplementary Notes 1 to 5, wherein the functions of the intermediate layer comprise means for, if a discard timer for a single upper layer PDU set expires, discarding all upper layer PDUs belonging to the single upper layer PDU set.

### (Supplementary Note 7)

The apparatus according to Supplementary Note 6, wherein a length of the discard timer is based on a delay budget for the associated upper layer PDU set.

### (Supplementary Note 8)

The apparatus according to Supplementary Note 6 or 7, wherein a length of the discard timer is based on importance of the associated upper layer PDU set.

### (Supplementary Note 9)

The apparatus according to any one of Supplementary Notes 1 to 8, wherein the functions of the intermediate layer comprise means for, if a delivery failure is confirmed for one or more specific upper layer PDUs belonging to a single upper layer PDU set, discarding all upper layer PDUs belonging to the single upper layer PDU set.

### (Supplementary Note 10)

The apparatus according to any one of Supplementary Notes 1 to 8, wherein the functions of the intermediate layer comprise means for, if a delivery failure is confirmed for a given number of upper layer PDUs belonging to a single upper layer PDU set, discarding all upper layer PDUs belonging to the single upper layer PDU set.

### (Supplementary Note 11)

The apparatus according to Supplementary Note 9 or 10, further comprising means for determining a delivery failure of one or more upper layer PDUs based on a delivery status report received from a peer apparatus.

### (Supplementary Note 12)

The apparatus according to Supplementary Note 11, wherein the delivery status report is sent by the peer apparatus in response to a timer expiration in the peer apparatus or based on a number of PDUs received by the peer apparatus.

### (Supplementary Note 13)

The apparatus according to Supplementary Note 11, wherein the delivery status report is sent by the peer apparatus at a given time interval or PDU interval.

### (Supplementary Note 14)

The apparatus according to any one of Supplementary Notes 1 to 5, further comprising means for providing functions of the lower layer or a second lower layer lower than the lower layer,
wherein the functions of the lower layer or the second lower layer comprises means for, if a discard timer for a plurality of lower layer or second-lower layer Service Data Units (SDUs) corresponding to a single upper layer PDU set expires, discarding all lower layer or second-lower layer SDUs corresponding to the single upper layer PDU set.

### (Supplementary Note 15)

The apparatus according to any one of Supplementary Notes 1 to 5, further comprising means for providing functions of the lower layer or a second lower layer lower than the lower layer,
wherein the functions of the lower layer or the second lower layer comprises means for, if a delivery failure is confirmed for one or more specific Service Data Units (SDUs) among a plurality of lower layer or second-lower layer SDUs corresponding to a single upper layer PDU set, discarding all lower layer or second-lower layer SDUs corresponding to the single upper layer PDU set.

### (Supplementary Note 16)

The apparatus according to any one of Supplementary Notes 1 to 5, further comprising means for providing functions of the lower layer or a second lower layer lower than the lower layer,
wherein the functions of the lower layer or the second lower layer comprises means for, if a delivery failure is confirmed for a given number of lower layer or second-lower layer Service Data Units (SDUs) corresponding to a single upper layer PDU set, discarding all lower layer or second-lower layer SDUs corresponding to the single upper layer PDU set.

### (Supplementary Note 17)

The apparatus according to Supplementary Note 15 or 16, further comprising means for determining a delivery failure of one or more lower layer or second-lower layer SDUs based on a delivery status report received from a peer apparatus.

### (Supplementary Note 18)

The apparatus according to any one of Supplementary Notes 1 to 17, wherein
the intermediate layer is a Service Data Adaptation Protocol (SDAP) layer, and
the lower layer is a Packet Data Convergence Protocol (PDCP) layer.

### (Supplementary Note 19)

The apparatus according to any one of Supplementary Notes 1 to 18, wherein the upper layer is a PDU layer corresponding to PDUs carried on a PDU Session between a User Equipment (UE) and a Data Network (DN).

### (Supplementary Note 20)

The apparatus according to any one of Supplementary Notes 1 to 18, wherein the apparatus is arranged in a single radio access network node or distributed in a plurality of radio access network nodes.

### (Supplementary Note 21)

The apparatus according to any one of Supplementary Notes 1 to 18, wherein the apparatus is arranged in a User Equipment (UE).

### (Supplementary Note 22)

A method performed by an apparatus for radio communication, the method comprising:
providing functions of an intermediate layer between an upper layer and a lower layer, the functions of the intermediate layer comprising:
identifying, from a first upper layer Protocol Data Unit (PDU) flow, boundaries of a plurality of upper layer PDU sets, each of which is composed of one or more upper layer PDUs; and
mapping the plurality of upper layer PDU sets to a plurality of different data radio bearers based on one or more attributes of each upper layer PDU set.

### (Supplementary Note 23)

A program for causing a computer to perform a method for radio communication,
the method comprising providing functions of an intermediate layer between an upper layer and a lower layer, the functions of the intermediate layer comprising:
identifying, from a first upper layer Protocol Data Unit (PDU) flow, boundaries of a plurality of upper layer PDU sets, each of which is composed of one or more upper layer PDUs; and
mapping the plurality of upper layer PDU sets to a plurality of different data radio bearers based on one or more attributes of each upper layer PDU set.

### (Supplementary Note 24)

An apparatus for radio communication configured to provide functions of an intermediate layer between an upper layer and a lower layer, the functions of the intermediate layer comprising:
means for selecting, from a single intermediate layer Service Data Unit (SDU) set corresponding to a single upper layer Protocol Data Unit (PDU) set, a subset of SDUs of higher importance; and
means for concatenating or assembling the subset of intermediate layer SDUs into a single intermediate layer PDU.

### (Supplementary Note 25)

The apparatus according to Supplementary Note 24, wherein the intermediate layer is a Service Data Adaptation Protocol (SDAP) layer.

### (Supplementary Note 26)

The apparatus according to Supplementary Note 24, wherein the intermediate layer is a Packet Data Convergence Protocol (PDCP) layer.

### (Supplementary Note 27)

The apparatus according to any one of Supplementary Notes 24 to 26, wherein the functions of the intermediate layer comprise means for generating a plurality of intermediate layer PDUs, each of which includes a respective one of remaining intermediate layer SDUs belonging to the intermediate layer SDU set.

### (Supplementary Note 28)

The apparatus according to any one of Supplementary Notes 24 to 27, wherein the subset of intermediate layer SDUs corresponds to PDUs that are necessarily required to be received by a peer apparatus in order to utilize the upper layer PDU set.

### (Supplementary Note 29)

The apparatus according to any one of Supplementary Notes 24 to 28, wherein
the intermediate layer is a Service Data Adaptation Protocol (SDAP) layer, and
the lower layer is a Packet Data Convergence Protocol (PDCP) layer.

### (Supplementary Note 30)

The apparatus according to any one of Supplementary Notes 24 to 29, wherein the upper layer is a PDU layer corresponding to PDUs carried on a PDU Session between a User Equipment (UE) and a Data Network (DN).

### (Supplementary Note 31)

The apparatus according to any one of Supplementary Notes 24 to 30, wherein the apparatus is arranged in a single radio access network node or distributed in a plurality of radio access network nodes.

### (Supplementary Note 32)

The apparatus according to any one of Supplementary Notes 24 to 30, wherein the apparatus is arranged in a User Equipment (UE).

### (Supplementary Note 33)

A method performed by an apparatus for radio communication, the method comprising:
providing functions of an intermediate layer between an upper layer and a lower layer, the functions of the intermediate layer comprising:
selecting, from a single intermediate layer Service Data Unit (SDU) set corresponding to a single upper layer Protocol Data Unit (PDU) set, a subset of SDUs of higher importance; and
concatenating or assembling the subset of intermediate layer SDUs into a single intermediate layer PDU.

### (Supplementary Note 34)

A program for causing a computer to perform a method for radio communication,
the method comprising providing functions of an intermediate layer between an upper layer and a lower layer, the functions of the intermediate layer comprising:
selecting, from a single intermediate layer Service Data Unit (SDU) set corresponding to a single upper layer Protocol Data Unit (PDU) set, a subset of SDUs of higher importance; and
concatenating or assembling the subset of intermediate layer SDUs into a single intermediate layer PDU.

### (Supplementary Note 35)

An apparatus for radio communication configured to provide functions of an intermediate layer between an upper layer and a lower layer, the functions of the intermediate layer comprising:
means for, if a discard timer for a single intermediate layer Service Data Unit (SDU) set corresponding to a single upper layer Protocol Data Unit (PDU) set expires, discarding all intermediate layer SDUs belonging to the intermediate layer SDU set.

### (Supplementary Note 36)

The apparatus according to Supplementary Note 35, wherein a length of the discard timer is based on a delay budget for the corresponding upper layer PDU set.

### (Supplementary Note 37)

The apparatus according to Supplementary Note 36, wherein the length of the discard timer is determined based on a sum of a first value configured by a Radio Resource Control (RRC) layer and a second value corresponding to the delay budget.

### (Supplementary Note 38)

The apparatus according to Supplementary Note 36 or 37, wherein the first value is based on importance of the corresponding upper layer PDU set.

### (Supplementary Note 39)

The apparatus according to any one of Supplementary Notes 35 to 38, wherein the intermediate layer is a Service Data Adaptation Protocol (SDAP) layer.

### (Supplementary Note 40)

The apparatus according to any one of Supplementary Notes 35 to 38, wherein the intermediate layer is a Packet Data Convergence Protocol (PDCP) layer or a Radio Link Control (RLC) layer.

### (Supplementary Note 41)

The apparatus according to any one of Supplementary Notes 35 to 40, wherein the apparatus is arranged in a single radio access network node or distributed in a plurality of radio access network nodes.

### (Supplementary Note 42)

The apparatus according to any one of Supplementary Notes 35 to 40, wherein the apparatus is arranged in a User Equipment (UE).

### (Supplementary Note 43)

A method performed by an apparatus for radio communication, the method comprising:
providing functions of an intermediate layer between an upper layer and a lower layer,
wherein the functions of the intermediate layer comprise, if a discard timer for a single intermediate layer Service Data Unit (SDU) set corresponding to a single upper layer Protocol Data Unit (PDU) set expires, discarding all intermediate layer SDUs belonging to the intermediate layer SDU set.

### (Supplementary Note 44)

A program for causing a computer to perform a method for radio communication,
the method comprising providing functions of an intermediate layer between an upper layer and a lower layer,
wherein the functions of the intermediate layer comprise, if a discard timer for a single intermediate layer Service Data Unit (SDU) set corresponding to a single upper layer Protocol Data Unit (PDU) set expires, discarding all intermediate layer SDUs belonging to the intermediate layer SDU set.

### (Supplementary Note 45)

An apparatus for radio communication configured to provide functions of an intermediate layer between an upper layer and a lower layer, the functions of the intermediate layer comprising:
means for, if a delivery failure is confirmed for one or more intermediate layer Service Data Units (SDUs) belonging to a single intermediate layer SDU set corresponding to a single upper layer Protocol Data Unit (PDU) set, discarding all intermediate layer SDUs belonging to the intermediate layer SDU set.

### (Supplementary Note 46)

The apparatus according to Supplementary Note 45, wherein the means for discarding is configured to discard all intermediate layer SDUs belonging to the intermediate layer SDU set if a delivery failure is confirmed for one or more specific intermediate layer SDUs of higher importance belonging to the intermediate layer SDU set.

### (Supplementary Note 47)

The apparatus according to Supplementary Note 46, wherein the one or more specific intermediate layer SDUs of higher importance carry a subset of upper layer PDUs belonging to the upper layer PDU set, the subset being necessarily required to be received by a peer apparatus in order to utilize the upper layer PDU set.

### (Supplementary Note 48)

The apparatus according to Supplementary Note 45, wherein the means for discarding is configured to discard all intermediate layer SDUs belonging to the intermediate layer SDU set if a delivery failure is confirmed for a given number of intermediate layer SDUs belonging to the intermediate layer SDU set.

### (Supplementary Note 49)

The apparatus according to any one of Supplementary Notes 45 to 48, wherein the functions of the intermediate layer comprise means for determining a delivery failure of one or more intermediate layer SDUs based on a delivery status report received from a peer apparatus.

### (Supplementary Note 50)

The apparatus according to Supplementary Note 49, wherein the delivery status report is sent by the peer apparatus in response to a timer expiration in the peer apparatus.

### (Supplementary Note 51)

The apparatus according to Supplementary Note 49, wherein the delivery status report is sent by the peer apparatus after each successful reception of a given number of intermediate layer SDUs or PDUs.

### (Supplementary Note 52)

The apparatus according to any one of Supplementary Notes 45 to 51, wherein the intermediate layer is a Service Data Adaptation Protocol (SDAP) layer.

### (Supplementary Note 53)

The apparatus according to any one of Supplementary Notes 45 to 51, wherein the intermediate layer is a Packet Data Convergence Protocol (PDCP) layer or a Radio Link Control (RLC) layer.

### (Supplementary Note 54)

The apparatus according to any one of Supplementary Notes 45 to 53, wherein the apparatus is arranged in a single radio access network node or distributed in a plurality of radio access network nodes.

### (Supplementary Note 55)

The apparatus according to any one of Supplementary Notes 45 to 53, wherein the apparatus is arranged in a User Equipment (UE).

### (Supplementary Note 56)

A method performed by an apparatus for radio communication, the method comprising:
providing functions of an intermediate layer between an upper layer and a lower layer,
wherein the functions of the intermediate layer comprise, if a delivery failure is confirmed for one or more intermediate layer Service Data Units (SDUs) belonging to a single intermediate layer SDU set corresponding to a single upper layer Protocol Data Unit (PDU) set, discarding all intermediate layer SDUs belonging to the intermediate layer SDU set.

### (Supplementary Note 57)

A program for causing a computer to perform a method for radio communication,
the method comprising providing functions of an intermediate layer between an upper layer and a lower layer,
wherein the functions of the intermediate layer comprise, if a delivery failure is confirmed for one or more intermediate layer Service Data Units (SDUs) belonging to a single intermediate layer SDU set corresponding to a single upper layer Protocol Data Unit (PDU) set, discarding all intermediate layer SDUs belonging to the intermediate layer SDU set.

This application is based upon and claims the benefit of priority from Japanese Patent Application No. 2022-155413, filed on September 28, 2022, the disclosure of which is incorporated herein in its entirety by reference.

### Reference Signs List

- 1: UE
- 2: RAN
- 3: RAN node
- 4: Core network
- 5: PSA UPF
- 6: Data network
- 7: Application server

## Claims

1. An apparatus for radio communication configured to provide functions of an intermediate layer between an upper layer and a lower layer, the functions of the intermediate layer comprising:
means for identifying, from a first upper layer Protocol Data Unit (PDU) flow, boundaries of a plurality of upper layer PDU sets, each of which is composed of one or more upper layer PDUs; and
means for mapping the plurality of upper layer PDU sets to a plurality of different data radio bearers based on one or more attributes of each upper layer PDU set.

2. The apparatus according to claim 1, wherein
the means for mapping is configured to perform the boundary identification and the mapping to the plurality of different data radio bearers with respect to a specific type of upper layer PDU flow, and
the functions of the intermediate layer comprise means for mapping, with respect to a non-specific type of upper layer PDU flow, all upper layer PDUs belonging to the non-specific type of upper layer PDU flow to a single data radio bearer.

3. The apparatus according to claim 1, wherein the one or more attributes comprise one or any combination of a type, importance, and dependency of each upper layer PDU set.

4. The apparatus according to any one of claims 1 to 3, wherein the functions of the intermediate layer comprise:
means for selecting a plurality of upper layer PDUs with higher importance from among an upper layer PDU set mapped to a first data radio bearer; and
means for concatenating or assembling the selected plurality of upper layer PDUs into a single intermediate layer PDU.

5. The apparatus according to any one of claims 1 to 3, wherein
the functions of the intermediate layer comprise:
means for generating a plurality of intermediate layer PDUs, each of which includes a respective one of upper layer PDUs of the plurality of upper layer PDU sets; and
means for sending the generated plurality of intermediate layer PDUs to the lower layer, and
the apparatus is configured to provide functions of the lower layer, the functions of the lower layer comprising:
means for selecting a plurality of intermediate layer PDUs containing a plurality of upper layer PDUs with higher importance from among an upper layer PDU set mapped to a first data radio bearer; and
means for concatenating or assembling the selected plurality of intermediate layer PDUs into a single lower layer PDU.

6. The apparatus according to any one of claims 1 to 5, wherein the functions of the intermediate layer comprise means for, if a discard timer for a single upper layer PDU set expires, discarding all upper layer PDUs belonging to the single upper layer PDU set.

7. The apparatus according to claim 6, wherein a length of the discard timer is based on a delay budget for the associated upper layer PDU set.

8. The apparatus according to claim 6 or 7, wherein a length of the discard timer is based on importance of the associated upper layer PDU set.

9. The apparatus according to any one of claims 1 to 8, wherein the functions of the intermediate layer comprise means for, if a delivery failure is confirmed for one or more specific upper layer PDUs belonging to a single upper layer PDU set, discarding all upper layer PDUs belonging to the single upper layer PDU set.

10. The apparatus according to any one of claims 1 to 8, wherein the functions of the intermediate layer comprise means for, if a delivery failure is confirmed for a given number of upper layer PDUs belonging to a single upper layer PDU set, discarding all upper layer PDUs belonging to the single upper layer PDU set.

11. The apparatus according to claim 9 or 10, further comprising means for determining a delivery failure of one or more upper layer PDUs based on a delivery status report received from a peer apparatus.

12. The apparatus according to claim 11, wherein the delivery status report is sent by the peer apparatus in response to a timer expiration in the peer apparatus or based on a number of PDUs received by the peer apparatus.

13. The apparatus according to claim 11, wherein the delivery status report is sent by the peer apparatus at a given time interval or PDU interval.

14. The apparatus according to any one of claims 1 to 5, further comprising means for providing functions of the lower layer or a second lower layer lower than the lower layer,
wherein the functions of the lower layer or the second lower layer comprises means for, if a discard timer for a plurality of lower layer or second-lower layer Service Data Units (SDUs) corresponding to a single upper layer PDU set expires, discarding all lower layer or second-lower layer SDUs corresponding to the single upper layer PDU set.

15. The apparatus according to any one of claims 1 to 5, further comprising means for providing functions of the lower layer or a second lower layer lower than the lower layer,
wherein the functions of the lower layer or the second lower layer comprises means for, if a delivery failure is confirmed for one or more specific Service Data Units (SDUs) among a plurality of lower layer or second-lower layer SDUs corresponding to a single upper layer PDU set, discarding all lower layer or second-lower layer SDUs corresponding to the single upper layer PDU set.

16. The apparatus according to any one of claims 1 to 5, further comprising means for providing functions of the lower layer or a second lower layer lower than the lower layer,
wherein the functions of the lower layer or the second lower layer comprises means for, if a delivery failure is confirmed for a given number of lower layer or second-lower layer Service Data Units (SDUs) corresponding to a single upper layer PDU set, discarding all lower layer or second-lower layer SDUs corresponding to the single upper layer PDU set.

17. The apparatus according to claim 15 or 16, further comprising means for determining a delivery failure of one or more lower layer or second-lower layer SDUs based on a delivery status report received from a peer apparatus.

18. The apparatus according to any one of claims 1 to 17, wherein
the intermediate layer is a Service Data Adaptation Protocol (SDAP) layer, and
the lower layer is a Packet Data Convergence Protocol (PDCP) layer.

19. The apparatus according to any one of claims 1 to 18, wherein the upper layer is a PDU layer corresponding to PDUs carried on a PDU Session between a User Equipment (UE) and a Data Network (DN).

20. The apparatus according to any one of claims 1 to 18, wherein the apparatus is arranged in a single radio access network node or distributed in a plurality of radio access network nodes.

21. The apparatus according to any one of claims 1 to 18, wherein the apparatus is arranged in a User Equipment (UE).

22. A method performed by an apparatus for radio communication, the method comprising:
providing functions of an intermediate layer between an upper layer and a lower layer, the functions of the intermediate layer comprising:
identifying, from a first upper layer Protocol Data Unit (PDU) flow, boundaries of a plurality of upper layer PDU sets, each of which is composed of one or more upper layer PDUs; and
mapping the plurality of upper layer PDU sets to a plurality of different data radio bearers based on one or more attributes of each upper layer PDU set.

23. A non-transitory computer readable medium storing a program for causing a computer to perform a method for radio communication,
the method comprising providing functions of an intermediate layer between an upper layer and a lower layer, the functions of the intermediate layer comprising:
identifying, from a first upper layer Protocol Data Unit (PDU) flow, boundaries of a plurality of upper layer PDU sets, each of which is composed of one or more upper layer PDUs; and
mapping the plurality of upper layer PDU sets to a plurality of different data radio bearers based on one or more attributes of each upper layer PDU set.

24. An apparatus for radio communication configured to provide functions of an intermediate layer between an upper layer and a lower layer, the functions of the intermediate layer comprising:
means for selecting, from a single intermediate layer Service Data Unit (SDU) set corresponding to a single upper layer Protocol Data Unit (PDU) set, a subset of intermediate layer SDUs of higher importance; and
means for concatenating or assembling the subset of intermediate layer SDUs into a single intermediate layer PDU.

25. The apparatus according to claim 24, wherein the intermediate layer is a Service Data Adaptation Protocol (SDAP) layer.

26. The apparatus according to claim 24, wherein the intermediate layer is a Packet Data Convergence Protocol (PDCP) layer.

27. The apparatus according to any one of claims 24 to 26, wherein the functions of the intermediate layer comprise means for generating a plurality of intermediate layer PDUs, each of which includes a respective one of remaining intermediate layer SDUs belonging to the intermediate layer SDU set.

28. The apparatus according to any one of claims 24 to 27, wherein the subset of intermediate layer SDUs corresponds to PDUs that are necessarily required to be received by a peer apparatus in order to utilize the upper layer PDU set.

29. The apparatus according to any one of claims 24 to 28, wherein
the intermediate layer is a Service Data Adaptation Protocol (SDAP) layer, and
the lower layer is a Packet Data Convergence Protocol (PDCP) layer.

30. The apparatus according to any one of claims 24 to 29, wherein the upper layer is a PDU layer corresponding to PDUs carried on a PDU Session between a User Equipment (UE) and a Data Network (DN).

31. The apparatus according to any one of claims 24 to 30, wherein the apparatus is arranged in a single radio access network node or distributed in a plurality of radio access network nodes.

32. The apparatus according to any one of claims 24 to 30, wherein the apparatus is arranged in a User Equipment (UE).

33. A method performed by an apparatus for radio communication, the method comprising:
providing functions of an intermediate layer between an upper layer and a lower layer, the functions of the intermediate layer comprising:
selecting, from a single intermediate layer Service Data Unit (SDU) set corresponding to a single upper layer Protocol Data Unit (PDU) set, a subset of intermediate layer SDUs of higher importance; and
concatenating or assembling the subset of intermediate layer SDUs into a single intermediate layer PDU.

34. A non-transitory computer readable medium storing a program for causing a computer to perform a method for radio communication,
the method comprising providing functions of an intermediate layer between an upper layer and a lower layer, the functions of the intermediate layer comprising:
selecting, from a single intermediate layer Service Data Unit (SDU) set corresponding to a single upper layer Protocol Data Unit (PDU) set, a subset of intermediate layer SDUs of higher importance; and
concatenating or assembling the subset of intermediate layer SDUs into a single intermediate layer PDU.

35. An apparatus for radio communication configured to provide functions of an intermediate layer between an upper layer and a lower layer, the functions of the intermediate layer comprising:
means for, if a discard timer for a single intermediate layer Service Data Unit (SDU) set corresponding to a single upper layer Protocol Data Unit (PDU) set expires, discarding all intermediate layer SDUs belonging to the intermediate layer SDU set.

36. The apparatus according to claim 35, wherein a length of the discard timer is based on a delay budget for the corresponding upper layer PDU set.

37. The apparatus according to claim 36, wherein the length of the discard timer is determined based on a sum of a first value configured by a Radio Resource Control (RRC) layer and a second value corresponding to the delay budget.

38. The apparatus according to claim 36 or 37, wherein the first value is based on importance of the corresponding upper layer PDU set.

39. The apparatus according to any one of claims 35 to 38, wherein the intermediate layer is a Service Data Adaptation Protocol (SDAP) layer.

40. The apparatus according to any one of claims 35 to 38, wherein the intermediate layer is a Packet Data Convergence Protocol (PDCP) layer or a Radio Link Control (RLC) layer.

41. The apparatus according to any one of claims 35 to 40, wherein the apparatus is arranged in a single radio access network node or distributed in a plurality of radio access network nodes.

42. The apparatus according to any one of claims 35 to 40, wherein the apparatus is arranged in a User Equipment (UE).

43. A method performed by an apparatus for radio communication, the method comprising:
providing functions of an intermediate layer between an upper layer and a lower layer,
wherein the functions of the intermediate layer comprise, if a discard timer for a single intermediate layer Service Data Unit (SDU) set corresponding to a single upper layer Protocol Data Unit (PDU) set expires, discarding all intermediate layer SDUs belonging to the intermediate layer SDU set.

44. A non-transitory computer readable medium storing a program for causing a computer to perform a method for radio communication,
the method comprising providing functions of an intermediate layer between an upper layer and a lower layer,
wherein the functions of the intermediate layer comprise, if a discard timer for a single intermediate layer Service Data Unit (SDU) set corresponding to a single upper layer Protocol Data Unit (PDU) set expires, discarding all intermediate layer SDUs belonging to the intermediate layer SDU set.

45. An apparatus for radio communication configured to provide functions of an intermediate layer between an upper layer and a lower layer, the functions of the intermediate layer comprising:
means for, if a delivery failure is confirmed for one or more intermediate layer Service Data Units (SDUs) belonging to a single intermediate layer SDU set corresponding to a single upper layer Protocol Data Unit (PDU) set, discarding all intermediate layer SDUs belonging to the intermediate layer SDU set.

46. The apparatus according to claim 45, wherein the means for discarding is configured to discard all intermediate layer SDUs belonging to the intermediate layer SDU set if a delivery failure is confirmed for one or more specific intermediate layer SDUs of higher importance belonging to the intermediate layer SDU set.

47. The apparatus according to claim 46, wherein the one or more specific intermediate layer SDUs of higher importance carry a subset of upper layer PDUs belonging to the upper layer PDU set, the subset being necessarily required to be received by a peer apparatus in order to utilize the upper layer PDU set.

48. The apparatus according to claim 45, wherein the means for discarding is configured to discard all intermediate layer SDUs belonging to the intermediate layer SDU set if a delivery failure is confirmed for a given number of intermediate layer SDUs belonging to the intermediate layer SDU set.

49. The apparatus according to any one of claims 45 to 48, wherein the functions of the intermediate layer comprise means for determining a delivery failure of one or more intermediate layer SDUs based on a delivery status report received from a peer apparatus.

50. The apparatus according to claim 49, wherein the delivery status report is sent by the peer apparatus in response to a timer expiration in the peer apparatus.

51. The apparatus according to claim 49, wherein the delivery status report is sent by the peer apparatus after each successful reception of a given number of intermediate layer SDUs or PDUs.

52. The apparatus according to any one of claims 45 to 51, wherein the intermediate layer is a Service Data Adaptation Protocol (SDAP) layer.

53. The apparatus according to any one of claims 45 to 51, wherein the intermediate layer is a Packet Data Convergence Protocol (PDCP) layer or a Radio Link Control (RLC) layer.

54. The apparatus according to any one of claims 45 to 53, wherein the apparatus is arranged in a single radio access network node or distributed in a plurality of radio access network nodes.

55. The apparatus according to any one of claims 45 to 53, wherein the apparatus is arranged in a User Equipment (UE).

56. A method performed by an apparatus for radio communication, the method comprising:
providing functions of an intermediate layer between an upper layer and a lower layer,
wherein the functions of the intermediate layer comprise, if a delivery failure is confirmed for one or more intermediate layer Service Data Units (SDUs) belonging to a single intermediate layer SDU set corresponding to a single upper layer Protocol Data Unit (PDU) set, discarding all intermediate layer SDUs belonging to the intermediate layer SDU set.

57. A non-transitory computer readable medium storing a program for causing a computer to perform a method for radio communication,
the method comprising providing functions of an intermediate layer between an upper layer and a lower layer,
wherein the functions of the intermediate layer comprise, if a delivery failure is confirmed for one or more intermediate layer Service Data Units (SDUs) belonging to a single intermediate layer SDU set corresponding to a single upper layer Protocol Data Unit (PDU) set, discarding all intermediate layer SDUs belonging to the intermediate layer SDU set.
